# EUROPÄISCHE PATENTSCHRIFT

(11) **EP 1 518 030 B1**
(45) Veröffentlichungstag und Bekanntmachung des Hinweises auf die Patenterteilung: **10.05.2017**
(21) Anmeldenummer: 03760677.9
(22) Anmeldetag: 23.06.2003
(51) Int. Cl.: E03C 1/05

(54) **MULTIFUNKTIONSARMATUR**
MULTI-FUNCTIONAL FITTING
ROBINETTERIE MULTIFONCTION

(30) Priorität: 24.06.2002 DE 20209799 U
(43) Veröffentlichungstag der Anmeldung: 30.03.2005
(73) Patentinhaber: WWB Sweden AB, 183 51 Täby (SE)
(72) Erfinder: BOLDERHEIJ, Fok, Cornelis, F-06600 antibes (FR); WELD, Fritz, 86316 Friedberg (DE)
(74) Vertreter: Ernicke, Klaus Stefan
(86) Internationale Anmeldenummer: PCT/EP2003/006573
(87) Internationale Veröffentlichungsnummer: WO 2004/001142

(56) Entgegenhaltungen:
- EP-A- 0 679 770
- EP-A- 0 961 067
- DE-A- 4 340 933
- DE-U- 9 313 983
- US-A- 5 868 311

## Beschreibung

Die Erfindung betrifft eine Multifunktionsarmatur mit den Merkmalen im Oberbegriff des Hauptanspruchs.

Eine solche Multifunktionsarmatur ist aus der EP 0 679 770 A2 bekannt. Sie besteht aus einer Auslaufarmatur für mehrere anwählbare Fluide, nämlich kaltes Wasser, Seife und Desinfektionsmittel. Die Multifunktionsarmatur besitzt ferner eine Sensoreinrichtung, eine Versorgungseinrichtung für die verschiedenen Fluide und eine Steuerung. Am Kopf der Auslaufarmatur ist eine optische Anzeige in Form von zwei oder drei verschiedenfarbigen LED's vorhanden, die in einer Reihe nebeneinander angeordnet sind. Die Multifunktionsarmatur arbeitet mit vorgegebenen und mittels der Sensoreinrichtung wählbaren Ablaufprogrammen. Die einzelnen LED's sind dabei jeweils einem Programm zugeordnet und leuchten bei dessen Auswahl auf. Die Anzeigefunktion der LED's erschöpft sich somit in der Angabe des gewählten und gerade ablaufenden Programms.

Die DE-A 199 27 230 zeigt eine andere Multifunktionsarmatur. Sie besteht aus einer Auslaufarmatur für mehrere Fluide, einer Sensoreinrichtung, einer Versorgungseinrichtung für die Fluide und einer Steuerung. Die Auslaufarmatur hat mehrere einzeln über die Sensorik berührungslos schaltbare Auslauföffnungen für die Fluide, z.B. Wasser, Desinfektionsmittel, Seife und dgl.. Die Wassertemperatur kann sensorisch und berührungslos geändert werden. Eine Anzeige ist an der Multifunktionsarmatur nicht vorhanden. Die Multifunktionsarmatur wird mit Erfolg im privaten Sanitärbereich, aber auch im medizinischen oder gewerblichen Bereich und insbesondere im Krankenhaus zum Desinfizieren der Hände im OP-Bereich eingesetzt.

Eine weitere Multifunktionsarmatur ist in der EP 0 798 290 A2 offenbart. Sie dient zur Abgabe von mit Ozon sterilisiertem Wasser und funktioniert auf der Basis von vorgegebenen Ablaufprogrammen, wobei für einzelne Schritte, z.B. Händewaschen in der Desinfektionsflüssigkeit, bestimmte Zeiten vorgegeben sind und eingehalten werden müssen. An der Auslaufarmatur ist eine mehrgliedrige Anzeige vorhanden, die neben einigen einzelnen LED's für Zustandsanzeigen auch eine Leuchtbalkenanzeige zur Signalisierung der verbleibenden Waschzeit aufweist. Die Leuchtbalkenanzeige wird von LED-Reihen gebildet. Durch sequenziellen Verlöschen der LED's verkürzt sich der Leuchtbalken und verdeutlicht dadurch den Zeitfortschritt.

Die US-A-5,062,164 zeigt eine Wasserarmatur, bei der die Wassertemperatur in einem numerischen LCD-Display am rückwärtigen Armaturensockel angezeigt wird. Der Wasserfluss wird mit einem Sensor ein und ausgeschaltet. Zur Steuerung von Durchflussmenge und Wassertemperatur sind Drehknöpfe seitlich am Armaturensockel angeordnet.

Die US 5,868,311 offenbart eine Multifunktionsarmatur mit einer Auslaufarmatur für unterschiedlich temperierbares Wasser, einer Sensoreinrichtung, einer Versorgungseinrichtung und einer Steuerung. Eine Sensoreinrichtung dient zum ein- und Ausschalten des Wasserflusses. Die Wassertemperatur und die Durchflussmenge können durch am Armaturensockel befindliche Sensoren berührungslos geändert werden. Es sind auch zwei Ziffernanzeigen mit LED's beidseits von der Auslaufarmatur am Armaturensockel angeordnet und zeigt die Wassertemperatur, die Durchflussmenge sowie Datum und Uhrzeit an. Die Ziffernanzeige ist als 7-Segment-Anzeige ausgebildet.

Die EP 0 961 067 A2 lehrt eine Multifunktionsarmatur mit einer Auslaufarmatur für unterschiedlich temperiertes Wasser, einer Versorgungseinrichtung für Warm- und Kaltwasser, einer Steuerung und einer an der Auslaufarmatur angeordneten optischen Anzeige. Mit einem Sensor wird sowohl der Wasserfluss eingeschaltet, als auch die Wassertemperatur durch Abstandsänderung berührungslos geändert. Eine Farbanzeige am Armaturenkopf signalisiert die eingestellte Wassertemperatur. Die Farbanzeige besteht aus einer Reihe von vier Dioden, von denen zwei Dioden blaues Licht und die anderen zwei Dioden rotes Licht emittieren. Die Dioden befinden sich an der Oberseite des Armaturenkopfes und sind von einer Kappe überdeckt, die Licht diffundieren lässt, wobei sie Dioden gegen Sicht abdeckt und das Licht der blauen und roten Dioden mischt.

Die DE 93 13 983 U befasst sich mit einer Konfiguration zur komplexen Steuerung mehrerer sanitärer Anlagen, die verteilt in einem Haus angeordnet sind. In der DE 43 40 933 ist eine Wasserarmaturensteuerung mit mehreren Sensoren offenbart.

Es ist Aufgabe der vorliegenden Erfindung, eine hinsichtlich ihrer Funktion und Bedienbarkeit verbesserte Multifunktionsarmatur aufzuzeigen.

Die Erfindung löst diese Aufgabe mit den Merkmalen im Hauptanspruch.
Die Zuordnung von einer graphikfähigen optischen Anzeige zur Multifunktionsarmatur bietet verschiedene Vorteile für die sichere, praktische und intuitive Bedienung der Multifunktionsarmatur. Hierbei kann dem Bediener durch optische Signalisierung, zusätzlich aber auch auf akustischem Wege mitgeteilt werden, in welchem Betriebszustand sich die Multifunktionsarmatur befindet, welche Veränderungen durch Einflussnahme des Bedieners vorgehen und was die Soll- und Istwerte von Fluidzuständen, z.B. die gewünschte und die erreichte Wassertemperatur sind. Besondere Betriebszustände, wie z.B. ein Putzmodus aber auch Problem- oder Alarmsituationen können ebenfalls signalisiert werden.

Zudem kann über die Anzeige eine Bedienerführung, insbesondere eine Bedienungsanleitung in geschriebener Form oder mit selbsterklärenden Symbolen oder Piktogrammen gegeben werden. Auch eine Menüführung durch verschiedene Programme der Steuerung der Multifunktionsarmatur ist möglich. Die Anzeige erlaubt außerdem eine Programmierung und/oder Parametrierung der Steuerung durch Eingaben an der Multifunktionsarmatur.

Durch die ihrerseits mit der Steuerung der Multifunktionsarmatur verbundene Anzeige kann der Bediener das Gerät einfacher, zielgerichteter und schneller bedienen. Fehlbedienungen können weitgehend ausgeschlossen werden.

An der Multifunktionsarmatur kann ferner ein Lesegerät angeschlossen sein und über die Anzeige bedient werden, welches bestimmte Eigenschaften der sich nähernden Personen erkennt und z.B. Personen anhand eines Transpondersignals, eines Barcodes oder dgl. identifizieren kann. Hierüber lassen sich z.B. vorgegebene Waschzyklen des Personals überwachen.

Ferner ist es vorteilhaft, wenn die Steuerung der Multifunktionsarmatur über eine geeignete DFÜ-Schnittstelle an eine übergeordnete Steuerung angeschlossen werden kann. Hierüber lässt sich in Verbindung mit einem Lesegerät oder auch einem Näherungssensor eine Alarmanlagenschaltung realisieren. Die Multifunktionsarmatur kann mit ihrer Sensorik und mit ihrer Anzeige somit auch für andere übergeordnete Zwecke, z.B. im Rahmen eines Gebäude- oder Hotelmanagements eingesetzt werden.

Die der Multifunktionsarmatur zugeordnete optische Anzeige ist ein graphikfähiges selbstleuchtendes Display oder-eine graphikfähige Feldanzeige. Die komplette Bildprojektionseinrichtung kann an der Multifunktionsarmatur untergebracht sein, wobei das für den Bediener sichtbare Bild am Kopfbereich der Auslaufarmatur entsteht.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Multifunktionsarmatur mit einer Anzeige in einer schematischen Seitendarstellung,
- Figur 2:: eine Draufsicht auf eine Anzeige gemäß Pfeil II von Figur 1,
- Figur 3:: eine Variante der Multifunktionsarmatur von Figur 1 mit einer anderen Anzeige in Seitenansicht,
- Figur 4:: die zugehörige Draufsicht auf die Anzeige,
- Figur 5:: eine Variante der Multifunktionsarmatur und der Anzeige in einer abgebrochenen und vergrößerten Seitenansicht und
- Figur 6:: eine Variante der optischen Anzeige.

In den Zeichnungen ist eine Multifunktionsarmatur (1) dargestellt, die zur Ausgabe von ein oder mehreren Fluiden vorgesehen ist. In konstruktiver Hinsicht kann die Multifunktionsarmatur (1) wie diejenige aus der DE-A 199 27 230 ausgebildet sein. Alternativ kann sie auch eine andere konstruktive Gestaltung haben.

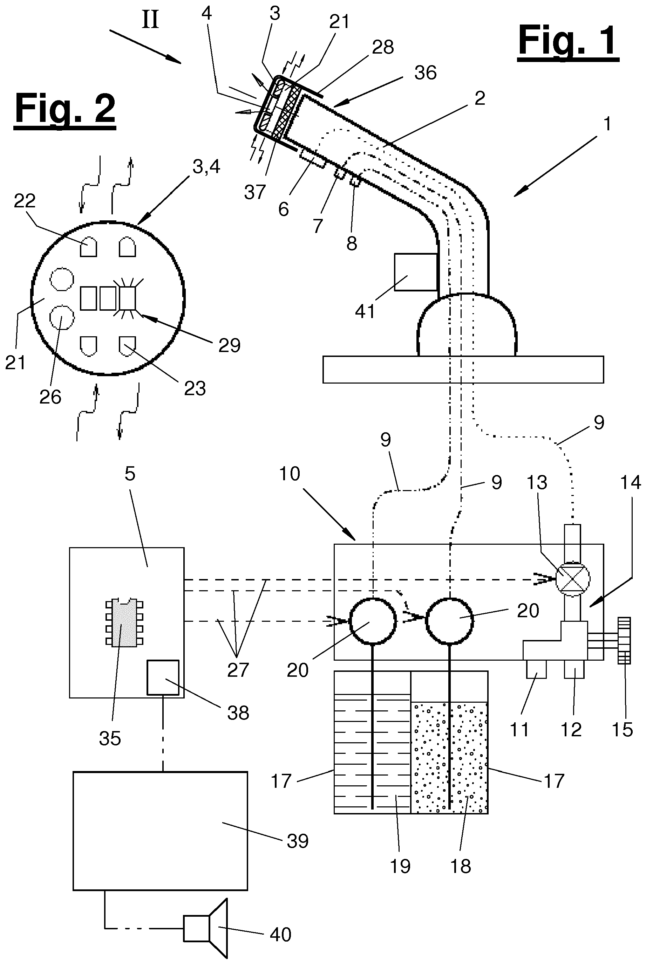

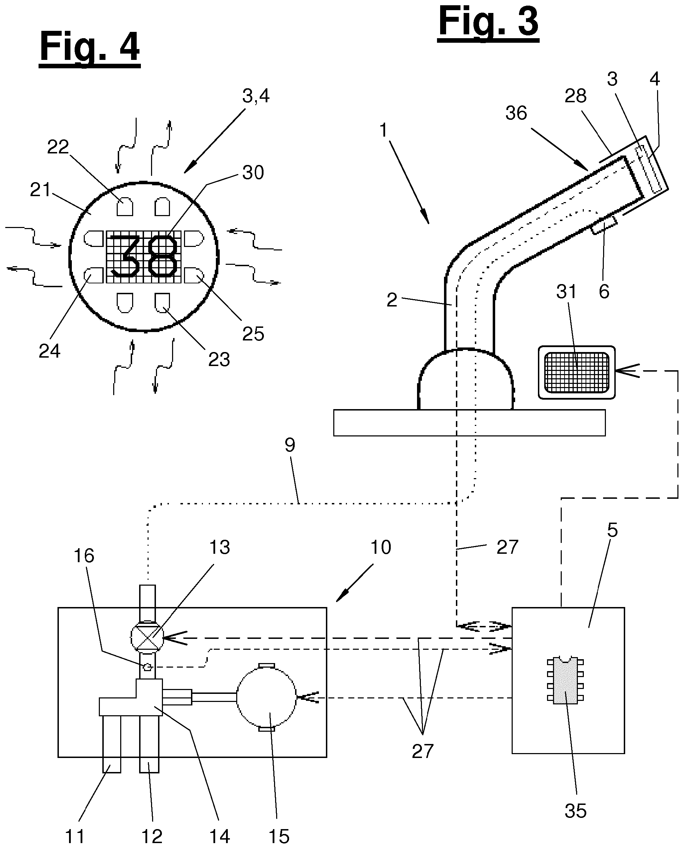

In der gezeigten Ausführungsform besteht die Multifunktionsarmatur (1) aus einer Auslaufarmatur (2), die nach Art eines Wasserhahns oder Wasserkrans ausgebildet ist und z.B. am Rand eines Waschbeckens montierbar ist. Die Wasserarmatur (2) hat ein oder mehrere Auslassöffnungen (6,7,8) für ein oder mehrere Fluide, z.B. Wasser, Seife, Desinfektionsmittel oder dgl.. Im Ausführungsbeispiel von Figur 1 werden die drei vorgenannten Fluide in gewünschter Reihenfolge oder ggf. auch einer gewünschten Mischung abgegeben. Bei der Armatur von Figur 3 wird über die einzelne Auslauföffnung (6) nur Wasser mit der gewünschten Temperatur ausgegeben. Die Multifunktionsarmatur (1) besitzt ferner eine Versorgungseinrichtung (10) für das oder die Fluid(e).

Wie in Figur 1 schematisch angedeutet, kann die Steuerung (5) eine Datenfernübertragungs-Schnittstelle (38) besitzen, die z.B. drahtlos per Funk, Ultraschall, Infrarot oder dgl. funktioniert oder als Drahtverbindung mit Steckern ausgeführt ist. Diese DFÜ-Schnittstelle (38) dient zur Kommunikation mit unterschiedlichen anderen Einheiten. Dies kann z.B. eine in Figur 1 dargestellte übergeordnete Steuerung (39) sein, an welche weitere Einheiten, z.B. eine Alarmanlage (40), angeschlossen sein können. Die übergeordnete Steuerung (39) kann unterschiedlichen Zwecken dienen. Einerseits kann dies eine Steuerung sein, mit der mehrere Multifunktionsarmaturen (1) für eine gemeinsame Steuerung zusammengeschlossen werden. Die übergeordnete Steuerung (39) kann alternativ oder zusätzlich auch eine Steuerung für das Raum- oder Gebäudemanagement sein.

Im Weiteren umfasst die Multifunktionsarmatur (1) eine Sensoreinrichtung (3) nebst einer angeschlossenen Steuerung (5) und mindestens eine Anzeige (4), welche ebenfalls mit der Steuerung (5) in geeigneter Weise, z.B. über elektrische Leitungen (27) verbunden ist. Die Stromversorgung der Teile kann in beliebig geeigneter Weise, z.B. über ein geregeltes oder ungeregeltes Steckernetzteil, ein oder mehrere Batterien, wiederaufladbare Akkus oder dgl. erfolgen. Die Steuerung (5) ist in der gezeigten Ausführungsform als separates Bauteil ausgebildet und an geeigneter Stelle, z.B. im Bereich der Versorgungseinrichtung (10), angeordnet. Sie kann alternativ auch in die Auslaufarmatur (2) integriert sein. Die Steuerung (5) umfasst mindestens einen Mikroprozessor (35) nebst zugehöriger Daten- und Programmspeicher sowie Schnittstellen zu den angesteuerten Teilen der Multifunktionsarmatur (1) und zu Eingabe-/Ausgabeeinheiten für die Daten, z.B. Programmierschnittstellen, etc. In dem oder den Datenspeicher(n) ist mindestens ein Funktionsprogramm der nachstehend näher beschriebenen Art hinterlegt, welches vom Mikroprozessor (35) zur Steuerung bzw. Regelung der Einzelteile der Multifunktionsarmatur (1) und deren Funktion abgearbeitet wird.

Die Anzeige (4) ist als graphikfähige optische Anzeige ausgebildet und befindet sich an der Stirnseite eines Armaturenkopfes (36), welcher am oberen Ende der Wasserauslaufarmatur (2) angeordnet ist. Die Anzeige (4) kann dadurch vom Bediener von vorn in der üblichen Nutzungs- oder Bedienstellung solcher Armaturen gesehen werden. Der Bediener kann hierdurch mit einem Blick sowohl die Wasserauslaufarmatur (2) und die dort ausgegebenen Fluide, wie auch die Anzeige (4) erfassen. Diese Form und Positionierung der Anzeige (4) ist ergonomisch besonders günstig, weil dem Bediener die Informationen während des Händewaschens, Desinfizierens oder dgl. übermittelt werden, ohne dass er den Kopf drehen muss.

Die Sensoreinrichtung (3) kann unterschiedlich ausgebildet sein. In der Variante von Figur 1 und 2 umfasst sie drei Sensoren mit unterschiedlichen Wirk- und Tastrichtungen. Die Sensoren arbeiten berührungslos und reagieren auf die Existenz menschlicher Körperteile, insbesondere der Hände, in ihrem Tastbereich. Die oberen Sensoren (22) haben einen an der Wasserarmatur (2) nach oben gerichteten Tastbereich. Die unteren Sensoren (23) wirken in entgegengesetzter Richtung nach unten. Die Sensoren (26) haben eine von der Wasserarmatur (2) nach vorn zum Bediener hin weisende Wirkrichtung und stellen die Existenz oder Annäherung eines Bedieners fest. Über den vorderen Sensor (26) kann z.B. ein Behinderter über eine Kopfbewegung die Multifunktionsarmatur (1) einschalten und bei geeigneter Programmauslegung ggf. auch steuern.

Bei der Ausführungsform von Figur 3 und 4 sind zwei nach oben und unten gerichtete Sensoren (22,23) und zwei seitliche, nach links und rechts gerichtete Sensoren (24,25) vorhanden. Die genannten Sensoren können in beliebig geeigneter konstruktiver Weise ausgebildet sein und auf beliebig geeigneten physikalischen Mess- und Erfassungsprinzipien beruhen. In der gezeigten Ausführungsform handelt es sich z.B. um Infrarotsensoren in der Art von Reflexlichttastern, welche das von einem in der Nähe befindlichen menschlichen Körperteil reflektierte Infrarotlicht erfassen und an die Steuerung (5) signalisieren. Die Sensoren und die Steuerung (5) sind hierbei ebenfalls in beliebig geeigneter Weise, z.B. durch elektrische Leitungen (27) verbunden. Die Infrarotsensoren beinhalten ein Sende- und ein Empfängerelement, welche eng benachbart nebeneinander angeordnet sind. Figur 2 und 4 zeigen diese Anordnung.

Die Sensoren (22,23,24,25,26) befinden sich vorzugsweise allesamt auf der Vorderseite einer elektrischen Platine (21) und sind an deren Rand in Umfangsrichtung verteilt angeordnet. Die Anordnung ist dabei vorzugsweise so gewählt, dass die Sensoren geometrisch eindeutig getrennte Tast- und Wirkbereiche haben, die einander nicht überlappen. Die Platine (21) hat vorzugsweise eine an die Stirnseite des Armaturenkopfes (36) angepasste Form und ist z.B. als kreisrunde Scheibe ausgebildet.

Die optische Anzeige (4) ist graphikfähig und ist z.B. als Feldanzeige (29) oder als Display (30) ausgebildet und befindet sich vorzugsweise ebenfalls auf der Vorderseite der Platine (21). Die Anzeige (4) ist hierbei zwischen den im äußeren Kreisumfang angeordneten Sensoren positioniert. Wie Figur 1 verdeutlicht, sind die Platine (21), die Sensoren und die Anzeige (4) miteinander von einer für Infrarotlicht durchlässigen Abdeckung (28) umgeben die außerdem in geeigneter Weise eine optische Erfassung der Anzeige (4) von vorn ermöglicht.

Die Abdeckung (28) bildet ein am oberen Ende der Auslaufarmatur (2) befestigbares Gehäuse, in dem die Komponenten der Sensoreinrichtung (3), der optischen Anzeige (4) und ggf. eine miniaturisierte Steuerung (5) untergebracht sind.

Die Abdeckung (28) kann ein Bestandteil des Armaturenkopfs (36) sein und die Montageeinheit zur Befestigung der Sensoreinrichtung (3) und der Anzeige (4) an der Auslaufarmatur (2) bilden. Die Fixierung auf der üblicherweise metallischen Auslaufarmatur (2) kann in beliebiger Weise erfolgen. Unter der Platine (21) und ihrer vorzugsweise nur frontseitig platzierten Sensoreinrichtung (3) ist eine Dichtmasse (37) in der Abdeckung (28) eingebracht, die eine Abdichtung gegen Feuchtigkeit und gegen Gase, z.B. Blei- und Zinndämpfe bietet.

In Figur 1 und 2 besteht die Feldanzeige (29) aus kleinen grafikfähigen selbstleuchtenden Anzeigefeldern, die z.B. aus einer Vielzahl von kleinen LED-Leuchten oder anderen kleinen Leuchtpunkten in einer dichten Matrixform bestehen. Eine solche Feldanzeige (29) ist mit einer entsprechenden Bildansteuerungseinheit verbunden, die es erlaubt, auf den einzelnen Anzeigefeldern komplexere Bildinhalte, wie z.B. Symbole, Zahlen oder Buchstaben oder selbsterklärende Piktogramme darzustellen.

In Figur 4 ist die optische Anzeige (4) als graphikfähiges Display (30) ausgebildet. Ein solches Display kann komplexere Informationen als die vorbeschriebene Feldanzeige (29) übermitteln. Es kann hierfür ebenfalls in unterschiedlicher Weise ausgebildet sein und besitzt z.B. eine selbstleuchtende Punkt-Matrix aus kleinen LED's, Flüssigkristallen (LCD's) oder anderen Elementen. Ggf. besitzt die Anzeige (4) bei passiven Matrixelementen eine Hintergrundbeleuchtung. Wie Figur 4 verdeutlicht, kann z.B. über das Display (30) eine Zahl, hier die Wassertemperatur, angezeigt werden. Bei entsprechend komplexeren Displays (30) können Informationen auch auf andere Weise, z.B. mehrzeilig mit Laufschrift oder dgl. signalisiert werden.

Das grafikfähige Display (30) bildet einen größeren zusammenhängenden Anzeigebereich in der Art eines Bildschirms oder Monitors im Kleinformat. Dies kann z.B. ein TFT-Monitor sein. Das Display (30) kann ferner als berührungssensitiver Touchscreen ausgebildet sein, der per Berührung besonderer sensitiver Bereiche Eingaben ermöglicht. Insbesondere können die Feldanzeige (29) und das Display (30) eine Farbdarstellung ermöglichen. Auf einem grafikfähigen Display (30) können neben den einfachen Zustandsinformationen komplexere Informationen übermittelt werden, z.B. in Form einer Bedienungsanleitung oder einer Menüführung. Eine solche Anzeigemöglichkeit gestattet den Einsatz einer komplexeren Steuerung und die Implementierung eines wesentlich vergrößerten Funktionsumfangs in die Multifunktionsarmatur (1).

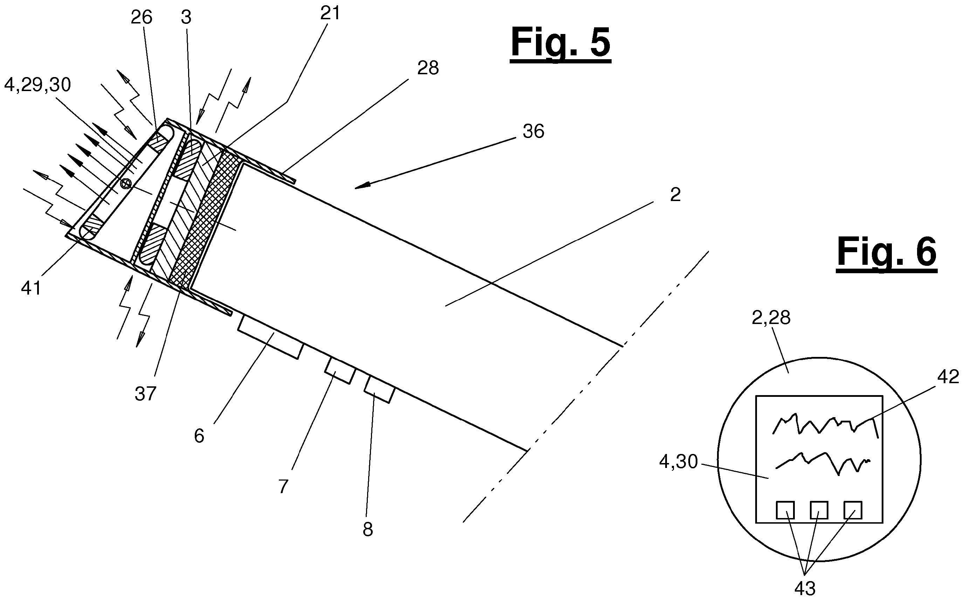

Figur 6 zeigt hierfür eine Ausgestaltung des Displays (30). Im oberen Bereich sind Schrift- oder Anzeigefelder (42) für Bedienerinformationen vorhanden. Am unteren Displayrand befinden sich selektiv anzeigbare Schalt- oder Symbolfelder (43) für eine Menüführung oder auch eine Eingabe im Falle eines Touchscreens. Als Schaltfelder eines Touchscreens können sie gezielt und direkt zum Auslösen der gewünschten Funktion betätigt werden. Als Symbolfelder sind sie den benachbarten Sensoren (23,24,25) zugeordnet und zeigen an, welche Funktion bei Sensorbetätigung ausgelöst wird. Über eine solche optische Anzeige (4) und die hier erscheinenden Informationen, Meldungen und Rückbestätigungen kann auch eine Programmierung und/oder Parametrierung der Steuerung (5) vor Ort an der Multifunktionsarmatur (1) vorgenommen werden.

Figur 3 verdeutlicht eine weitere Alternative, wobei zusätzlich zur optischen Anzeige (29,30) eine akustische Anzeige (31), hier z.B. ein Lautsprecher oder ein einfacher Klangerzeuger, z.B. ein Beeper, vorhanden und an die Steuerung (5) angeschlossen ist. Die Anzeige (31) kann in der einfachsten Ausführungsform einen simplen Piepton abgeben. In komplexeren Varianten können mehrere Töne unterschiedlicher Höhe, z.B. in Melodieform, emittiert werden. Zudem kann die Tondauer veränderlich sein. Auch die Lautstärke lässt sich variieren, wobei z.B. der Ton entsprechend einer Fluid-Veränderung lauter oder leiser wird. Eine entsprechende Signalisierung kann auch durch Veränderung der Piepfrequenz erreicht werden. Figur 1 und 2 sowie 3 und 4 verdeutlichen unterschiedliche Ausgestaltungsmöglichkeiten der Multifunktionsarmatur hinsichtlich der Zahl, Art und Veränderung der enthaltenen Fluide.

In Figur 1 und 2 dient die Multifunktionsarmatur (1) zur Abgabe dreier Fluide, hier Wasser, Seife und Desinfektionsmittel. Alternativ können mehr oder weniger Fluide oder auch andere Fluide, z.B. eine Handlotion zum Nachfetten der Haut nach Desinfektion und OP abgegeben werden. Die Zuschaltung und ggf. auch Dosierung der Fluide erfolgt über die Versorgungseinrichtung (10). Im Ausführungsbeispiel von Figur 1 und 2 werden die drei verschiedenen Fluide über eigene Rohrleitungen (9) von der an geeigneter Stelle, z.B. in einem Unterschrank oder am Waschbeckenunterrand angeordneten Versorgungseinrichtung (10) durch den Innenraum der Auslaufarmatur (2) zu den Auslauföffnungen (6,7,8) geführt. Vorzugsweise sind für die verschiedenen Fluide getrennte Auslauföffnungen vorhanden. Alternativ können auch ein oder mehrere gemeinsame Öffnungen verwendet werden.

Im Ausführungsbeispiel von Figur 1 und 2 sind an die Versorgungseinrichtung (10) ein Wasserzulauf (11) für Warmwasser und ein Wasserzulauf (12) für Kaltwasser angeschlossen. Die Versorgungseinrichtung (10) beinhaltet eine Mischeinrichtung (14) mit einer Stelleinrichtung (15) zum Mischen der unterschiedlich temperierten Wasserströme. Oberhalb der Mischeinrichtung (14) befindet sich ein mit der Steuerung (5) über die Leitung (27) verbundenes Ventil (13) zum Zu- und Abschalten der unter Druck zugeführten Wasserströme.

Die Seife (18) und das Desinfektionsmittel (19) sind in geeigneten Behältern (17), z.B. Flaschen enthalten und werden über geeignete Fördereinrichtungen, hier z.B. Pumpen (20) mit Saugrohren an die Versorgungseinrichtung (10) angeschlossen. Die Pumpen (20) sind ebenfalls mit der Steuerung (5) verbunden. Bei zähflüssigen oder trocknungsempfindlichen Fluiden, z.B. Seife, erhält der Pumpenmotor von der Steuerung (5) einen hohen pulsweisen Einschaltstrom, der anschließend wieder auf den normalen Pumpenstrom reduziert wird. Auf den hohen Einschaltstrom kann ggf. verzichtet werden, wenn sich die Seifenanforderung häufig wiederholt und wenn die dazwischen liegenden Ruhezeiten so kurz sind, dass keine Verdickungen des Fluids zu befürchten sind.

Die von den Wasserzuläufen (11,12) bzw. den Pumpen (20) abgegebene Fluidmenge kann von der Steuerung (5) dosiert werden. Wenn die Fördermenge bzw. der Förderdruck während des Betriebs im Wesentlichen konstant bleibt, kann die Dosierung über eine Steuerung der Einschaltdauer bzw. Laufzeit des Ventils (13) und der Pumpen (20) erfolgen. Hierbei können zusätzliche Funktionen in die Steuerung (5) implementiert sein, indem z.B. automatisch eine Wasserabschaltung erfolgt, wenn eine voreingestellte maximale Fließdauer von z.B. 30 Sekunden überschritten ist, oder wenn das die Wasserabgabe anfordernde Sensorsignal über eine entsprechende längere Zeit statisch ansteht. Diese Sicherheitsabschaltung dient der Erkennung und Behebung von Fehlfunktionen, die z.B. durch einen gefüllten Wassertopf im Waschbecken und die entsprechende Sensor-Fehlinterpretation verursacht werden.

In der Ausführungsform von Figur 1 und 2 dient der obere Sensor (22) zur Selektion des Fluides. Wenn der Bediener einmal mit der Hand in geeigneter Nähe über den Armaturenkopf (36) und den an der Stirnseite angeordneten oberen Sensor (22) fährt, wird der Behälter (17) mit dem Fluid 2 bzw. der Seife (18) für den nächsten Abgabevorgang selektiert. Führt der Bediener die Bewegung zweimal hintereinander mit kurzem Abstand aus, wird das dritte Fluid bzw. das Desinfektionsmittel (19) selektiert. In der Grundeinstellung ist Wasser selektiert. Die vorgenommene Anwahl wird hierbei über die Feldanzeige (29) signalisiert. Die grafikfähigen Feldelemente in Matrixform können durch Symbole oder Piktogramme die gewählten Medien anzeigen. Zudem können durch Laufbilder weitere Funktionen, wie Ausflussstärke, Temperatur oder dgl. signalisiert werden. Hierbei können auch Zahlenwerte angezeigt werden.

Über den unteren Sensor (23) wird die Fluidausgabe angefordert. Wenn der Bediener mit der Hand einmal im Tastbereich unter dem Armaturenkopf (36) bzw. dem unteren Sensor (23) durchfährt, beginnt die Förderung des zuvor in der vorbeschriebenen Weise selektierten Fluids. Während des Handwaschvorgangs ändern sich für den unteren Sensor (23) ständig die Tast- und Signalverhältnisse, wobei die Hände im Tastbereich bleiben. Entsprechend lange bleibt die Wasserzufuhr angeschaltet, wobei über die ständige Veränderung der Sensorsignale während der Anschaltdauer die Steuerung (5) die korrekte Funktion erkennen kann. Sobald der Bediener die Hände aus dem in der Tiefe beschränkten Tastbereich des unteren Sensors (23) entfernt, beendet die Steuerung (5) die Wasserabgabe.

Während der Fluidabgabe kann an der Feldanzeige (29) eine entsprechende Signalisierung stattfinden.

Bei den anderen Fluiden Seife (18) oder Desinfektionsmittel (19) kann die Abgabemenge in der Steuerung (5) fest eingestellt sein. Dies ist z.B. bei Desinfektionsmittel auf der Basis von entsprechenden medizinischen Vorschriften der Fall. Die Fluidabgabe wird dann nach Ablauf der eingestellten Pumpenlaufzeit automatisch abgeschaltet. Wenn der Bediener eine größere Menge des gewählten Fluids wünscht, kann er dies durch ein nochmaliges Auslösen des Abgabevorgangs mit einer entsprechenden Handbewegung erzielen.

Bei einer automatisierten Multifunktionsarmatur (1) mit einer entsprechenden Steuerung (5) können besondere Ergonomieeffekte erzielt werden. Zum einen lässt sich hierüber eine Nachlaufsteuerung realisieren, die beim Abschalten durch den Bediener noch kaltes Wasser nachlaufen lässt, um eine evtl. hohe Spitzentemperatur wieder auf einen Mittelwert zu senken. In Verbindung mit einer entsprechenden Sensorik kann auch gleich von der Steuerung (5) eine bestimmte mittlere Temperatur von z.B. 38° C voreingestellt werden. Hierdurch wird verhindert, dass der nachfolgende Bediener in Unkenntnis der Einstellung seines Vorgängers zu heißes oder zu kaltes Wasser erhält.

In der Variante von Figur 3 und 4 ist nur eine Auslauföffnung (6) für Wasser vorhanden. Hierbei kann allerdings die gewünschte Temperatur eingestellt und verändert werden, welche durch das Display (30) oder die vorbeschriebene graphikfähige Feldanzeige (29) angezeigt wird. Die beiden seitlichen Sensoren (24,25) sind hierbei für die Einstellung des Mischungsverhältnisses zuständig. Die Stelleinrichtung (15) für die Mischeinrichtung (14) ist als Stellmotor oder als ein anderes geeignetes von der Steuerung (5) fernsteuerbares Antriebsmittel ausgestaltet. Außerdem kann an der Mischeinrichtung (14), z.B. nach dem Mischort und vor dem Ventil (13) ein Temperaturfühler (16) angeordnet und mit der Steuerung (5) verbunden sein. Der Temperaturfühler (16) kann auch hinter dem Ventil (13) sitzen.

In der Ausgangssituation zeigt das Display (30) eine Ausgangstemperatur als Zahlenwert an, welche z.B. von der Steuerung (5) voreingestellt ist. Dieser Sollwert kann vom Bediener vor der Wasserabgabe verändert werden, indem er mit der linken oder der rechten Hand in den Tastbereich des linken Sensors (24) oder rechten Sensors (25) kommt. Mit der linken Hand wird z.B. die Temperatur erhöht und mit der rechten gesenkt. Die dabei eintretenden Temperaturänderungen werden wiederum vom Display (30) angezeigt.

Wenn die gewünschte Soll-Temperatur erreicht ist, kann durch Betätigen des unteren Sensors (23) die Wasserabgabe ausgelöst werden. In der gezeigten Ausführungsform findet über den Temperatursensor (16) eine automatische Regelung der Wasserabgabetemperatur seitens der Steuerung (5) statt. Hierbei kann allerdings auch während des Wasserauslaufs auf Wunsch die Solltemperatur durch Betätigung des linken oder rechten Sensors verändert werden, wobei die Steuerung (5) die Wassertemperatur entsprechend nachregelt. Mit Abwandlung der gezeigten Ausführungsform kann der Temperatursensor (16) auch entfallen, wobei die Einstellung der gewünschten Wassertemperatur vom Bediener in der vorbeschriebenen Weise vor und ggf. während des Wasserabgabevorgangs manuell vorgenommen wird.

Bei der Ausführungsform von Figur 1 und 2 kann es verschiedene besondere Einstellungen geben. Wenn z.B. der linke und der rechte Sensor (24,25) vom Bediener gleichzeitig betätigt werden, wird hierdurch ein in der Steuerung (5) voreingestellter Festwert der Wassertemperatur ausgewählt.

Bei der gezeigten Variante hat der obere Sensor (22) im Gegensatz zu Figur 1 und 2 keine Selektions-Funktion. Bei der Warmwasserversorgung von Figur 3 und 4 kann hierüber eine Mengeneinstellung bei der Wasserabgabe erfolgen. Die Mengeneinstellung kann über eine gewählte und selektierte Öffnungsdauer und einen Auslass, z.B. einen Perlator, mit Durchflussmengenbegrenzung erfolgen. Wenn der Bediener den oberen Sensor (22) kurzzeitig betätigt, wird ein erster Einstellwert von z.B. einem halben Liter Wasser ausgewählt, der dann bei Betätigung des unteren Sensors (23) aus der Auslaufarmatur (2) ausläuft. Wird der obere Sensor (22) längere Zeit betätigt, wird ein höherer Maximalwert von z.B. max. 6 Litern eingestellt. Diese Menge entspricht z.B. in einem Haushalt einer Eimerfüllung. Die eingestellte Menge wird wiederum automatisch abgegeben und kann durch kurzzeitige Betätigung des unteren Sensors (23) auch wieder gestoppt werden. Diese Mengenbegrenzung hat andererseits aber den Vorteil, dass sich eine Hausfrau von der Armatur entfernen kann, um während der Füllzeit anderen Tätigkeiten nachzugehen. Sie kann sicher sein, dass die voreingestellte Menge nicht überschritten wird. Den gefüllten Eimer kann sie dann zu gegebener Zeit entnehmen. Diese Funktion hat ferner für Behinderte Vorteile.

Das Display (30) kann derartige Vorgänge ebenfalls in geeigneter Weise signalisieren und z.B. eine Beendigung des voreingestellten Füllvorgangs durch ein Blinken der Anzeige signalisieren. Zur Anzeige von Temperatur- oder Durchflussänderungen kann das Display (30) einen Farbwechsel zeigen. Ggf. kann hierbei zusätzlich oder alternativ die akustische Anzeige (31) in Funktion treten. Diese kann z.B. einen Medienwechsel durch ein kurzes Klick-Signal anzeigen.

Die gezeigten Ausführungsbeispiele lassen sich in verschiedener Weise verändern und auch miteinander kombinieren. Bei der Variante von Figur 1 und 2 kann nur ein zusätzliches Fluid (18), z.B. nur Seife vorhanden sein. Alternativ können es auch mehr als zwei zusätzliche Fluide sein. Außerdem kann an die Multifunktionsarmatur (1) und die Auslaufarmatur (2) noch mindestens ein Zusatzgerät angeschlossen sein, z.B. ein Warmluftgebläse zum Händetrocknen. Ferner kann bei der Multifunktionsarmatur (1) mit den verschiedenen Fluiden gemäß Figur 1 und 2 auch eine Temperatursteuerung oder - regelung gemäß Figur 3 und 4 ergänzend angeordnet sein. In diesem Fall ändert sich die Sensorbestückung an der Platine (21), wobei zusätzlich zu den vier im Kreuz verteilten Sensoren (22,23,24,25) ggf. der vordere Sensor (26) noch hinzu tritt. Er kann auch weggelassen werden. Desgleichen können auch die optischen Anzeigen (29,30) untereinander vertauscht werden. Variabel sind ferner die Anordnung und Ausrichtung der Felder in der Feldanzeige (29). Sie kann auch mehrzeilig sein. Ferner ist es möglich, besondere Schaltzuständige zu signalisieren, z.B. durch ein entsprechendes Displayverhalten. Hierdurch lässt sich ein sog. Putzmodus signalisieren, bei dem die normalen Sensor- und Bedienfunktionen der Multifunktionsarmatur (1) über eine ggf. voreingestellte Zeitspanne ausgeschaltet sind, um ein ungestörtes Putzen des Waschbeckens zu ermöglichen.

In einer weiteren Abwandlung ist es möglich, die Steuerung (5) zu miniaturisieren und ebenfalls auf der Platine (21), z.B. an der Rückseite, anzubringen. Hierbei kann ein Teil oder der komplette Umfang der Steuerungsfunktionen implementiert werden. In der einfachsten Ausführungsform ist ein kleiner Mikroprozessor für die Steuerung der optischen Anzeige (4) an der Platine (21) angebracht. In komplexeren Ausführungsformen kann die komplette Steuerung (5) hier untergebracht sein. Die verschiedenen Funktions-und Steuerprogramme sind dabei über geeignete Speicherbausteine implementiert.

Figur 5 zeigt eine weitere Variante der Multifunktionsarmatur (1) und ihrer optischen Anzeige (4), die wiederum wahlweise als Feldanzeige (29) mit Einzelfeldern oder als zusammenhängendes und monitorartiges Display (30) ausgebildet sein kann. Die optische Anzeige (4) ist hier im Kopf der Abdeckung (28) angeordnet und kann zum Bediener hin schräg gestellt sein, so dass sie leichter abgelesen werden kann. Zudem ist es möglich, die optische Anzeige (4) beweglich in einem entsprechenden Gehäuse mit Drehlager der Abdeckung (28) unterzubringen. Eine Hintergrundbeleuchtung ist hier für alle Arten von optischen Anzeigen (4) ebenfalls möglich.

Figur 5 verdeutlicht ferner die Möglichkeit, an der optischen Anzeige (4) einen oder mehrere Näherungssensoren (26) anzubringen, die die Annäherung einer Person registrieren und an die Steuerung (5) (nicht dargestellt) melden. Hierüber kann z.B. die Multifunktionsarmatur (1) aus einem Stromspar- oder Schlafmodus geweckt und in Betriebsbereitschaft versetzt werden. Zudem können über den Näherungssensor (26) noch weitere nachfolgend beschriebene Funktionen realisiert werden.

An der optischen Anzeige (4) kann ferner ein Lesegerät (41) angebracht sein. Dieses kann alternativ an anderer Stelle der Abdeckung (28) oder wie in Figur 1 auch am Gehäuse der Auslaufarmatur (2) oder an anderer Stelle untergebracht sein. Das Lesegerät (41) kann von außen vorzugsweise drahtlos gesendete Informationen aufnehmen. Hierzu kann es z.B. als Transpondereinrichtung, als Barcode-Leser oder dgl. ausgebildet sein. Die externen Informationen werden vorzugsweise vom Bediener über entsprechende Informationsmittel, wie einen mitgeführten Transponder, einen Barcode-Streifen oder dgl. übermittelt. Diese Informationen können personenbezogen sein und den Bediener identifizieren. In der Steuerung (5) oder ggf. auch in einer übergeordneten Steuerung (39) können diese Informationen über ein entsprechendes Programm, z.B. ein Personalwirtschaftsprogramm, ausgewertet und verarbeitet werden. Im Gaststättenbereich oder in anderen von der Hygiene her kritischen Bereichen können für das Personal Vorschriften hinsichtlich der Waschzyklen bestehen. Anhand der vom Lesegerät (41) aufgenommenen Personendaten kann die Einhaltung dieser Waschzyklen kontrolliert und protokolliert werden.

Die Sensoreinrichtung (3) kann in Verbindung mit der Steuerung (5) und einer übergeordneten Steuerung (39) auch zu anderen Kontroll- und Überwachungszwecken eingesetzt werden. In einem Hotel oder dgl. anderer Örtlichkeit kann die Multifunktionsarmatur (1) als Alarmsensorik benutzt werden. In diesem Fall ist an die übergeordnete Steuerung (39) eine Türsensorik oder dgl. angeschlossen, die feststellt, ob sich ein berechtigter Gast im Raum befindet oder ob er den Raum verlässt. Bei Verlassen des Raumes, was z.B. über eine Schlüsselkarte oder die Schlosssteuerung signalisiert wird, schaltet die Steuerung (5,39) die Multifunktionsarmatur (1) als Alarmsensorik scharf. Wenn eine Person unberechtigt in den Raum eindringt und insbesondere in den Sanitärbereich gelangt, wird dies von der Sensorik (3) bemerkt. Dies kann einerseits durch eine Helligkeitsänderung beim Einschalten des Lichtes oder über den Näherungssensor (26) festgestellt werden. Über das Lesegerät (41) lässt sich zudem feststellen, ob die eingedrungene Person zum Personal gehört oder nicht. Wenn die eingedrungene Person als unberechtigte Person erkannt wird, kann über die Steuerung (5,9) und eine Alarmanlage (40) ein offener oder verborgener Alarm ausgelöst werden.

Die Steuerungen (5,39) bieten noch weitere Möglichkeiten, wie z.B. eine Ferndiagnose über den Zustand der Multifunktionsarmatur (1). In Verbindung mit einer geeigneten Sensorik kann hierbei auch festgestellt werden, ob die Fluide (18,19) in ausreichender Menge vorhanden sind. Zudem kann erkannt werden, ob im System eine Betriebsstörung vorliegt und welcher Art diese ggf. ist.

### BEZUGSZEICHENLISTE

- 1: Multifunktionsarmatur
- 2: Auslaufarmatur
- 3: Sensoreinrichtung
- 4: Anzeige
- 5: Steuerung
- 6: Auslauföffnung für Fluid 1, Wasser
- 7: Auslauföffnung für Fluid 2, Seife
- 8: Auslauföffnung für Fluid 3, Desinfektionsmittel
- 9: Leitung für Fluide
- 10: Versorgungseinrichtung für Fluide
- 11: Wasserzulauf warm
- 12: Wasserzulauf kalt
- 13: Ventil
- 14: Mischeinrichtung
- 15: Stelleinrichtung
- 16: Temperaturfühler
- 17: Behälter, Flasche
- 18: Fluid 2, Seife
- 19: Fluid 3, Desinfektionsmittel
- 20: Pumpe
- 21: Platine
- 22: Sensor oben
- 23: Sensor unten
- 24: Sensor links
- 25: Sensor rechts
- 26: Sensor vorn
- 27: Leitung elektrisch
- 28: Abdeckung
- 29: optische Anzeige, Feldanzeige
- 30: optische Anzeige, Display
- 31: akustische Anzeige, Lautsprecher
- 32 33 34 35: Microprozessor
- 36: Armaturenkopf
- 37: Dichtung, Dichtmasse
- 38: DFÜ-Schnittstelle
- 39: übergeordnete Steuerung
- 40: Alarmanlage
- 41: Lesegerät, Transponder, Barcode-Leser
- 42: Schriftfeld, Anzeigefeld
- 43: Schaltfeld, Symbolfeld

## Patentansprüche

1. Multifunktionsarmatur (1), bestehend aus einer Auslaufarmatur (2) für ein oder mehrere, gegebenenfalls in ihrem Zustand veränderliche Fluide (18,19), einer Sensoreinrichtung (3), einer Versorgungseinrichtung (10) für das Fluid oder die Fluide (18,19) und einer Steuerung (5), wobei die Multifunktionsarmatur (1) mindestens eine an der Auslaufarmatur (2) angeordnete optische Anzeige (4) aufweist, die an die Steuerung (5) angeschlossen ist und an der Stirnseite eines Armaturenkopfes (36) angeordnet ist, **dadurch gekennzeichnet, dass** die optische Anzeige (4) graphikfähig ist und eine graphikfähige Feldanzeige (29) oder ein graphikfähiges Display (30) mit jeweils einer Punkt-Matrix von mehreren selbstleuchtenden Anzeigeelementen, vorzugsweise Flüssigkristallen oder LED's aufweist und wobei die Multifunktionsarmatur (1) eine steuer- oder regelbare Mischeinrichtung (14) für unterschiedlich temperierte Fluide, vorzugsweise warmes und kaltes Wasser, und eine Sensoreinrichtung (3) zur berührungslosen Temperaturänderung sowie eine der mindestens eine an der Auslaufarmatur (2) angeordnete optische graphikfähige Anzeige (4) für die Soll- und/oder Istwerte der Fluidtemperatur aufweist, wobei die graphikfähige optische Anzeige (4) und die Sensoreinrichtung (3) von einer Infrarot durchlässigen Abdeckung (28) umgeben sind, welche ein am oberen Ende der Auslaufarmatur (2) befestigbares Gehäuse bildet, in dem die Komponenten der Sensoreinrichtung (3) und der graphikfähigen Anzeige (4) untergebracht sind.

2. Multifunktionsarmatur nach Anspruch 1, **dadurch gekennzeichnet, dass** die optische Anzeige (4) mit der Sensoreinrichtung (3) auf einer gemeinsamen Platine (21) am Armaturenkopf (36) angeordnet ist.

3. Multifunktionsarmatur nach Anspruch 1 oder 2, **dadurch gekennzeichnet, dass** die Multifunktionsarmatur (1) mindestens eine weitere Anzeige, insbesondere eine akustische Anzeige (31) aufweist.

4. Multifunktionsarmatur nach Anspruch 1, 2 oder 3, **dadurch gekennzeichnet, dass** die Multifunktionsarmatur (1) eine Versorgungseinrichtung (10) für mehrere Fluide (18,19) sowie eine optische Anzeige (29,30) und/oder akustische Anzeige (31) zur Signalisierung der Fluidauswahl und verschiedener Betriebszustände aufweist.

5. Multifunktionsarmatur nach einem der vorhergehenden Ansprüche, **dadurch gekennzeichnet, dass** die Steuerung (5) einen Microprozessor (35), ein Zeitglied und ein oder mehrere Programmspeicher aufweist.

6. Multifunktionsarmatur nach einem der vorhergehenden Ansprüche, **dadurch gekennzeichnet, dass** die Steuerung (5) eine DFÜ-Schnittstelle (38) zur Verbindung mit einer übergeordneten Steuerung (39) aufweist.

7. Multifunktionsarmatur nach einem der vorhergehenden Ansprüche, **dadurch gekennzeichnet, dass** die Multifunktionsarmatur (1) ein mit der Steuerung (5) verbundenes Lesegerät (41) für Benutzerinformationen aufweist.

8. Multifunktionsarmatur nach einem der vorhergehenden Ansprüche, **dadurch gekennzeichnet, dass** das Lesegerät (41) als Transpondereinrichtung oder als Barcode-Leser ausgebildet ist.

9. Multifunktionsarmatur nach einem der vorhergehenden Ansprüche, **dadurch gekennzeichnet, dass** das Lesegerät (41) in die optische Anzeige (4) integriert ist.

## Claims

1. Multi-functional tap (1), comprising an outlet tap (2) for one or more fluids (18, 19), possibly variable in their state, a sensor device (3), a supply device (10) for the fluid or fluids (18, 19) and a controller (5), the multi-functional tap (1) having at least one optical display (4) which is arranged on the outlet tap (2) and is connected to the controller (5) and is arranged on the front side of a tap head (36), **characterized in that** the optical display (4) is graphics-capable and has a graphics-capable field display (29) or a graphics-capable display (30) each having a dot matrix of a plurality of self-illuminating display elements, preferably liquid crystals or LEDs, and wherein the multi-functional tap (1) has a mixing device (14) which can be controlled or regulated for differently temperature-controlled fluids, preferably hot and cold water, and a sensor device (3) for non-contact temperature change as well as one of the at least one optical graphics-capable displays (4) arranged on the outlet tap (2) for the reference and/or actual values of the fluid temperature, wherein the graphics-capable optical display (4) and the sensor device (3) are surrounded by an infra-red- transparent cover (28) which forms a housing which can be fastened to the upper end of the outlet tap (2) and in which the components of the sensor device (3) and the graphics-capable display (4) are accommodated.

2. Multi-functional tap according to Claim 1, **characterized in that** the optical display (4) is arranged with the sensor device (3) on a common circuit board (21) on the tap head (36).

3. Multi-functional tap according to Claim 1 or 2, **characterized in that** the multi-functional tap (1) has at least one further display, in particular an acoustic display (31).

4. Multi-functional tap according to Claim 1, 2 or 3, **characterized in that** the multi-functional tap (1) has a supply device (10) for a plurality of fluids (18, 19) and an optical display (29, 30) and/or acoustic display (31) for signalling the fluid selection and various operating states.

5. Multi-functional tap according to one of the preceding claims, **characterized in that** the controller (5) has a microprocessor (35), a timing element and one or more program memories.

6. Multi-functional tap according to one of the preceding claims, **characterized in that** the controller (5) has a data telecommunications interface (38) to be connected to a higher-order controller (39).

7. Multi-functional tap according to one of the preceding claims, **characterized in that** the multi-functional tap (1) has a reader (41) connected to the controller (5) for user information.

8. Multi-functional tap according to one of the preceding claims, **characterized in that** the reader (41) is designed as a transponder device or as a bar-code reader.

9. Multi-functional tap according to one of the preceding claims, **characterized in that** the reader (41) is integrated in the optical display (4).

## Revendications

1. Élément de robinetterie multifonction (1), composé d'un élément de robinetterie de sortie (2) pour un ou plusieurs fluides (18, 19) dont l'état peut éventuellement changer, d'un dispositif de détection (3), d'un dispositif d'alimentation (10) pour le fluide ou les fluides (18, 19) et une commande (5), l'élément de robinetterie multifonction (1) possédant au moins un indicateur visuel (4) disposé sur l'élément de robinetterie de sortie (2), lequel est raccordé à la commande (5) et disposé sur le côté frontal d'une tête d'élément de robinetterie (36), **caractérisé en ce que** l'indicateur visuel (4) présente des capacités graphiques et possède un indicateur en zone (29) ayant des capacités graphiques ou un afficheur (30) ayant des capacités graphiques, comprenant respectivement une matrice de points de plusieurs éléments indicateurs autolumineux, de préférence des cristaux liquides ou des LED, et l'élément de robinetterie multifonction (1) possédant un dispositif mélangeur (14) commandable ou régulable pour des fluides se trouvant à différentes températures, de préférence de l'eau froide et chaude, et un dispositif de détection (3) destiné à la modification sans contact de la température ainsi que l'un parmi l'au moins un indicateur visuel (4) ayant des capacités graphiques disposé sur l'élément de robinetterie de sortie (2) pour les valeurs de consigne et/ou réelle de la température des fluides, l'indicateur visuel (4) ayant des capacités graphiques et le dispositif de détection (3) étant entourés par un capotage (28) transparent aux infrarouges, lequel forme un boîtier qui peut être fixé sur l'extrémité supérieure de l'élément de robinetterie de sortie (2) dans lequel sont logés les composants du dispositif de détection (3) et de l'indicateur (4) ayant des capacités graphiques.

2. Élément de robinetterie multifonction selon la revendication 1, **caractérisé en ce que** l'indicateur visuel (4) est disposé avec le dispositif de détection (3) sur une platine (21) commune sur la tête d'élément de robinetterie (36).

3. Élément de robinetterie multifonction selon la revendication 1 ou 2, **caractérisé en ce que** l'élément de robinetterie multifonction (1) possède au moins un indicateur supplémentaire, notamment un indicateur sonore (31).

4. Élément de robinetterie multifonction selon la revendication 1, 2 ou 3, **caractérisé en ce que** l'élément de robinetterie multifonction (1) possède un dispositif d'alimentation (10) pour plusieurs fluides (18, 19) ainsi qu'un indicateur visuel (29, 30) et/ou un indicateur sonore (31) pour la signalisation de la sélection du fluide et de différents états de fonctionnement.

5. Élément de robinetterie multifonction selon l'une des revendications précédentes, **caractérisé en ce que** la commande (5) possède un microprocesseur (35), un élément de temporisation et une ou plusieurs mémoires de programme.

6. Élément de robinetterie multifonction selon l'une des revendications précédentes, **caractérisé en ce que** la commande (5) possède une interface de télétransmission de données (38) destinée à la connexion à une commande de supervision (39).

7. Élément de robinetterie multifonction selon l'une des revendications précédentes, **caractérisé en ce que** l'élément de robinetterie multifonction (1) possède un lecteur (41) d'informations d'utilisateur qui est relié à la commande (5).

8. Élément de robinetterie multifonction selon l'une des revendications précédentes, **caractérisé en ce que** le lecteur (41) est réalisé sous la forme d'un dispositif à transpondeur ou d'un lecteur de code à barres.

9. Élément de robinetterie multifonction selon l'une des revendications précédentes, **caractérisé en ce que** le lecteur (41) est intégré dans l'indicateur visuel (4).
